Europäisches Patentamt

European Patent Office

Office européen des brevets

(11) Publication number: **0 159 102**
**B1**

(12) **EUROPEAN PATENT SPECIFICATION**

(45) Date of publication of patent specification: **18.10.89**

(21) Application number: **85300014.9**

(22) Date of filing: **02.01.85**

(51) Int. Cl.⁴: **C 08 L 23/08** // (C08L23/08, 23:12, 23:16)

(54) Blends of LLDPE, PP and EPDM or EPR for films of improved stiffness, tear and impact strength.

(30) Priority: **04.01.84 US 568016**

(43) Date of publication of application:
**23.10.85 Bulletin 85/43**

(45) Publication of the grant of the patent:
**18.10.89 Bulletin 89/42**

(84) Designated Contracting States:
**AT BE CH DE FR IT LI LU NL SE**

(56) References cited:
**EP-A-0 102 857**
**FR-A-2 537 981**
**US-A-3 137 672**

(73) Proprietor: **MOBIL OIL CORPORATION**
**150 East 42nd Street**
**New York New York 10017 (US)**

(72) Inventor: **Bahl, Surinder Kumar**
**6 Candlewood Drive**
**West Windsor, NJ 08550 (US)**
Inventor: **Canterino, Peter John**
**39 Mary Drive**
**Towaco, NJ 07082 (US)**
Inventor: **Shaw, Richard Gregg**
**260 Carlton Avenue**
**Piscataway, NJ 08854 (US)**

(74) Representative: **Cooper, John Anthony et al**
**Mobil Court 3 Clements Inn**
**London WC2A 2EB (GB)**

EP 0 159 102 B1

Courier Press, Leamington Spa, England.

**Description**

This invention relates to blends of linear low density polyethylene and polypropylene.

It is known that films produced from blends of linear low density polyethylene (LLDPE) and polypropylene (PP) have improved stiffness (higher modulus) than films produced from LLDPE alone. However, such films exhibit a catastrophic decrease in impact and tear strength, particularly in the machine direction (MD). We have now found that films produced from LLDPE/PP blends containing minor amounts of an ethylene-propylene-diene monomer rubber (EPDM) or ethylene-propylene rubber (EPR) have the expected increase in stiffness along with unexpectedly improved MD Elmendorf tear and dart drop impact properties.

US—A—3,137,672 discloses a blend of polyethylene and stereoregular polypropylene having improved impact strength by incorporating therein a small amount of a copolymer of ethylene and propylene and a solid inorganic additive. The copolymer is believed to be an effective dispersing aid for the inorganic additive which is needed to improve the toughness and impact strength of the blend. The use of linear low density polyethylene is not suggested in this patent. Moreover, the presence of the inorganic additive is specifically required in this patent.

Accordingly, the present invention resides in a thermoplastic polymer blend comprising:

70 or more weight percent of a linear low density copolymer of ethylene and an olefin having 4 to 10 carbon atoms (LLDPE);

2 or more weight percent of polypropylene (PP) or propylene-ethylene copolymer with a high propylene content; and an amount of

less than 2 weight percent of an ethylene-propylene-diene terpolymer (EPDM) or an ethylene-propylene rubber (EPR).

Preferably, the blend comprises:

85 or more weight% LLDPE

5 or more weight% PP, and

0.1—1 weight% of EPDM or EPR.

The blends of this invention can be physical blends of pellets of the separate ingredient or melt blends. The blends in either case are intended for ultimate formation into articles, such as films, by conventional techniques, such as extrusion.

The term linear low density polyethylene (LLDPE) as used herein refers to copolymers of ethylene and an alpha-olefin having 4 to 10 carbon atoms. Representative alpha-olefins include butene, hexene and octene. Generally, the LLDPE contains up to about 10 weight percent of polymerized alpha-olefin, has a density of 0.9 to 0.94 and a melt index of 0.2 to 10. The preparation of LLDPE is described in U.S. Patent 4,076,698, although LLDPE is also commercially available.

The term ethylene-propylene-diene monomer terpolymer (EPDM) is used herein in the sense of its definition in ASTMD—1418—64 and is intended to mean terpolymers containing ethylene and propylene in the backbone and a diene in a side chain which results in an olefin. Illustrative methods for producing these terpolymers are found in U.S. Patent No. 3,280,082, British Patent No. 1,030,289 and French Patent No. 1,386,600, although these materials are commercially available, e.g., Vistalon® 1721 supplied by Exxon. The preferred polymers contain 0.1 to 20 weight percent of diene monomer, the balance of the polymer being ethylene and propylene. More preferably, the polymer contains 1.0 to 15 weight percent diene monomer, e.g., 3.3 weight percent. The diene monomer employed is a nonconjugated diene, the preferred nonconjugated diene monomers being hexadiene, dicyclopentadiene, ethylidene norbornene, methylene norbornene, propylidene norbornene and methyltetrahydroindene. Ethylene-propylene rubbers are commercially available, e.g., Vistalon 719 as supplied by Exxon.

The polypropylene (PP) referred to herein includes any of the known homopolymers of this class, as well as ethylene-propylene copolymers having a high propylene content which is generally above 90 weight percent. Ethylene-propylene copolymers with a propylene content of about 97 weight have been found to be suitable, many of which are commercially available. The polypropylene homopolymer or copolymer is selected for its ability to impart stiffness to the blend as shown by increased secant modulus. The amount of polypropylene required to achieve the desired stiffness (modulus) will vary within the ranges given above depending on the alpha-olefin comonomer used to prepare the LLDPE, the melt index of the LLDPE and other factors.

The invention is illustrated by the following non-limiting Examples.

## Example 1

Films 1.5 mil (0.04 mm) in thickness were prepared from LLDPE, LLDPE/PP blend and from LLDPE/PP/EPDM blends in the indicated weight ratios. The films were measured for secant modulus, tear strength and dart drop impact as set forth in the Table 1 below.

TABLE 1

| TYPE | WEIGHT RATIO | SECANT MODULUS lb/sq. in. (kg/cm²) | | TEAR STRENGTH g/mil. (kg/cm) | | DART DROP IMPACT (grams) |
|---|---|---|---|---|---|---|
| | | (MD) | (TD) | (MD) | (TD) | |
| LLDPE | 100 | 27400 (1928) | 27600 (1942) | 140 (55) | 250 (98) | 100 |
| LLDPE/PP | 90/10 | 40800 (2871) | 38800 (2730) | 65 (26) | 185 (73) | 60 |
| LLDPE/PP/EPDM | 90/9/1 | 45300 (3188) | 45300 (3188) | 105 (41) | 215 (85) | 160 |

The LLDPE employed is identified as GRSN 7042 available from Union Carbide and is a copolymer of ethylene with about 4 mole percent butene-1 and having a melt flow index of 2.0 grams/10 minutes and a density of 0.918 gm/cm³. The PP was Arco® W 472 polypropylene homopolymer and the EPDM was Vistalon 1721 available from Exxon.

Example 2

Blown films of 5 mil (0.13 mm) thickness were produced from LLDPE using hexene as the comonomer both alone and as a blend with 15% by weight of polypropylene (as supplied by Eastman as Tenite 4240E) and 1% by weight EPDM homopolymer (as supplied by Exxon as Vistalon 3708). The results given in Table 2 below show that although the films had similar modulus values, the film produced from the blend had improved tear strength.

TABLE 2

| | | BLEND[1] | LLDPE ALONE[2] |
|---|---|---|---|
| Secant Modulus psi (kPa) | MD | 56700 (391000) | 54500 (376000) |
| | TD | 52200 (360000) | 62800 (426000) |
| Elmendorf Tear g/mil (kg/cm) | MD | 590 (232) | 280 (110) |
| | TD | 510 | 485 |
| Dart impact g(F$_{50}$) | | >800 | >800 |
| Break Strength psi (kPa) | MD | 5330 (36750) | 5170 (35650) |
| | TD | 4690 (32340) | 4910 (33850) |
| Break elongation % | MD | 915 | 915 |
| | TD | 920 | 945 |
| Toughness x 10$^4$ psi (x 10$^5$ kPa) | MD | 2.41 (1.66) | 2.41 (1.66) |
| | TD | 2.20 (1.52) | 2.43 (1.68) |
| Film density | | 0.917 | 0.926 |

[1] The LLDPE employed was Union Carbide HS 7068
[2] The LLDPE employed was Union Carbide HS 7064

## Example 3

Blown films of 1 mil (0.03 mm) thickness were produced from LLDPE supplied by Dow under the trade name Dowlex 2045 and using octene as the monomer both alone and as a blend with Arco W 756 polypropylene copolymer and Vistalon 1721 EPDM, the weight ratio of the blend using 84 LLDPE:15 PP:1 EPDM.

The results given in Table 3 below show that the film produced from the blend exhibited only slight deterioration in film MD tear compared to the base resin, whereas a significant increase in modulus of the film was obtained.

### TABLE 3

|  |  | LLDPE ALONE | BLEND |
|---|---|---|---|
| Secant Modulus, psi (kPa x $10^3$) | MD | 28,600 (197) | 32,100 (221) |
|  | TD | 29,900 (206) | 36,400 (251) |
| MD Tear, g/mil (kg/cm) |  | 300 (118) | 245 (96) |

## Example 4

A first blown film 1.5 mil (0.04 mm) thick was produced from a blend of 84.75% by weight of the LLDPE used in Example 1, 15% by weight of Eastman Tenite® 4240E polypropylene homopolymer and 0.25% by weight of Vistalon 3708 EPDM. The same materials were then used to produce a second blown film of the same thickness but in which the weight ratio of the materials was 74.75 LLDPE, 25 PP and 0.25 EPDM.

### TABLE 4

|  |  | FILM 1 | FILM 2 |
|---|---|---|---|
| Secant Modulus | MD | 45,200 psi (312 x $10^3$ kPa) | 55,100 psi (380 x $10^3$ kPa) |
|  | TD | 43,700 psi (301 x $10^3$ kPa) | 53,400 psi (368 x $10^3$ kPa) |
| Elmendorf Tear | MD | 130 g/mil (51 kg/cm) | 80 g/mil (31 kg/cm) |
|  | TD | 215 g/mil (85 kg/cm) | 190 g/mil (75 kg/cm) |
| Dart drop (g) |  | 120 | 85 |

## Example 5

Three blown films 7 mil (0.18 mm) thick were produced from the following compositions:

| | | |
|---|---|---|
| *Film A* | LLDPE (Union Carbide HS 7064) | 85% |
| | PP | 13.5% |
| | Ethylene-propylene rubber (EPR) | 1.5% |
| *Film B* | LLDPE (Union Carbide HS 7068) | 85% |
| | PP | 13.5% |
| | EPR | 1.5% |
| *Film C* | LLDPE (Unifos 8141) | 100% |

The LLDPE materials were ethylene/hexene copolymers having densities of 0.927 (HS 7064), 0.919 (HS 7068) and 0.933 (Unifos® 8141). The PP and EPR was added as a preblend of PP with about 10% EPR as supplied by Eastman as type P 7673—780A.

The properties of the resultant films are given in Table 5 below.

TABLE 5

| | | FILM A | FILM B | FILM C |
|---|---|---|---|---|
| Secant Modulus psi (kPa x $10^3$) | MD | 67,500 (465) | 50,700 (356) | 61,000 |
| | TD | 64,700 (446) | 45,200 (312) | 63,000 |
| Elmendorf tear (g) | MD | 1,830 | >3,200 | 1,300 |
| | TD | 1,610 | >3,200 | >3,200 |
| Dart drop (g) | | >800 | >800 | 630 |

**Claims**

1. A thermoplastic blend comprising:
70 or more weight percent of a linear low density copolymer of ethylene and an olefin having 4 to 10 carbon atoms (LLDPE);
2 or more weight percent of polypropylene (PP) or propylene-ethylene copolymer with a high propylene content; and an amount of
less than 2 weight percent of a ethylene-propylene-diene terpolymer (EPDM) or an ethylene-propylene rubber (EPR).

2. The thermoplastic blend of Claim 1 comprising:
85 or more weight percent of LLDPE;
5 or more weight percent PP; and
0.1 to 1 weight percent of EPDM or EPR.

3. The thermoplastic blend of Claim 1 or Claim 2 in which said olefin is butene.

4. The thermoplastic blend of Claim 1 or Claim 2 in which said olefin is hexene.

5. The thermoplastic blend of Claim 1 or Claim 2 in which said olefin is octene.

6. The thermoplastic blend of any preceding claim in the form of a film.

**Patentansprüche**

1. Thermoplastische Mischung aus
70 oder mehr Gew.-% eines linearen Ethylencopolymers niedriger Dichte und eines Olefins mit 4 bis 10 Kohlenstoffatomen (LLDPE),
2 oder mehr Gew.-% Polypropylen (PP) oder eines Propylen-Ethylen-Copolymers mit einem hohen Gehalt an Propylen und einer Menge von
weniger als 2 Gew.-% eines Ethylen-Propylen-Dien-Terpolymers (EPDM) oder eines Ethylen-Propylen-Kautschuks (EPR).

2. Thermoplastische Mischung nach Anspruch 1 mit
85 oder mehr Gew.-% LLDPE,
5 oder mehr Gew.-% PP und
0,1 bis 1 Gew.-% EPDM oder EPR.

3. Thermoplastische Mischung nach Anspruch 1 oder 2, in der das Olefin Buten ist.

4. Thermoplastische Mischung nach Anspruch 1 oder 2, in der das Olefin Hexen ist.

5. Thermoplastische Mischung nach Anspruch 1 oder 2, in der das Olefin Octen ist.

6. Thermoplastische Mischung nach einem der vorhergehenden Ansprüche in Form eines Films.

**Revendications**

1. Un mélange thermoplastique comprenant:
70% en poids ou plus d'un copolymère basse densité linéaire d'éthylène et d'une oléfine en $C_4$—$C_{10}$ (LLDPE);
2% en poids ou plus de polypropylène (PP) ou d'un copolymère propylène-éthylène ayant une teneur élevée en propylène; et
une quantité de moins de 2% en poids d'un terpolymère éthylène-propylène-diène (EPDM) ou d'un caoutchouc éthylène-propylène (EPR).

2. Le mélange thermoplastique selon la revendication 1 comprenant:
85% en poids ou plus de LLDPE;
5% en poids ou plus de PP et
0,01 à 1% en poids d'EPDM ou d'EPR.

5

3. Le mélange thermoplastique selon la revendication 1 ou 2, dans lequel ladite oléfine est le butène.

4. Le mélange thermoplastique selon la revendication 1 ou 2, dans lequel ladite oléfine est l'hexène.

5. Le mélange thermoplastique selon la revendication 1 ou 2, dans lequel ladite oléfine est l'octène.

6. Le mélange thermoplastique selon l'une quelconque des revendications précédentes sous la forme d'un film.